# EUROPEAN PATENT APPLICATION

(11) **EP 3 432 141 A1**
(43) Date of publication of application: **23.01.2019**
(21) Application number: 17765720.2
(22) Date of filing: 02.03.2017
(51) Int. Cl.: G06F 9/445

(54) **MOBILE TERMINAL APPLICATION UPDATE METHOD AND DEVICE**

(30) Priority: 15.03.2016 CN 201610147375
(71) Applicant: Alibaba Group Holding Limited, Grand Cayman (KY)
(72) Inventor: SHENG, Ding, Hangzhou Zhejiang 311121 (CN)
(74) Representative: Conroy, John
(86) International application number: PCT/CN2017/075464
(87) International publication number: WO 2017/157178

(57) **Abstract**

The present application provides a mobile terminal application update method and device. The method includes downloading an offline compressed package from a server, where the offline compressed package includes one or more types of files; identifying a file type of each file in the offline compressed package after the offline compressed package is decompressed; and sending the file to a container that matches the file type for running, to complete updating. The developer in the present application can pack different types of files into the same offline compressed package without distinguishing the file types, thereby greatly improving development efficiency of the developer. In addition, an APP does not need to decompress a plurality of offline compressed packages, thereby improving an application update rate.

## Description

### TECHNICAL FIELD

The present application relates to the field of computer technologies, and in particular, to a mobile terminal application update method and device.

### BACKGROUND

With the rapid development of Internet technologies, users can implement various service operations by using applications installed on mobile terminals, for example, a payment operation and a shopping operation. In the related technologies, to fix current-version defects or to improve a current version, the developer usually updates applications after the applications are released. How to improve development efficiency during application updating becomes a problem to be resolved.

### SUMMARY

The present application provides a mobile terminal application update method and device.

The present application is implemented by using the following technical solutions:

A mobile terminal application update method is provided, and the method includes the following: downloading an offline compressed package from a server, where the offline compressed package includes one or more types of files; identifying a file type of each file in the offline compressed package after the offline compressed package is decompressed; and sending the file to a container that matches the file type for running to complete updating.

Optionally, the identifying a file type of each file in the offline compressed package includes the following: identifying the file type of each file based on a suffix of the file in the offline compressed package.

Optionally, the sending the file to a container that matches the file type for running includes sending the file to a Web View container for running when the file is an HTML file.

Optionally, the sending the file to a container that matches the file type for running includes sending the file to a React-Native container for running when the file is a React-Native file.

A mobile terminal application update device is provided, and the device includes the following: a download unit, configured to download an offline compressed package from a server, where the offline compressed package includes one or more types of files; an identification unit, configured to identify a file type of each file in the offline compressed package after the offline compressed package is decompressed; and a running unit, configured to send the file to a container that matches the file type for running, to complete updating.

Optionally, the identification unit is configured to identify the file type of each file based on a suffix of the file in the offline compressed package after the offline compressed package is decompressed.

Optionally, the running unit is configured to send the file to a WebView container for running when the file is an HTML file.

Optionally, the running unit is configured to send the file to a React-Native container for running when the file is a React-Native file.

It can be seen from the previous descriptions that the developer in the present application can pack different types of files into the same offline compressed package without distinguishing the file types, thereby improving development efficiency of the developer. In the present application, an application can identify the file type of each file in the offline compressed package after downloading the offline compressed package, and send the file to the container that matches the file type for running, to update the application without decompressing a plurality of offline compressed packages, thereby improving an application update rate.

### BRIEF DESCRIPTION OF DRAWINGS

FIG. 1 is a schematic flowchart illustrating a mobile terminal application update method, according to an example implementation of the present application;
FIG. 2 is a schematic structural diagram illustrating a mobile terminal application update device, according to an example implementation of the present application; and
FIG. 3 is a schematic structural diagram illustrating a mobile terminal application update device, according to an example implementation of the present application.

### DESCRIPTION OF IMPLEMENTATIONS

Example implementations are described in detail here, and examples of the implementations are indicated in the accompanying drawings. When the following descriptions relate to the accompanying drawings, the same number in different accompanying drawings indicates the same or similar element unless otherwise specified. Implementations described in the following example implementations do not represent all implementations consistent with the present application. Instead, these implementations are merely examples of devices and methods consistent with some aspects of the present application, as described in detail in the appended claims.

The terms used in the present application are merely for illustrating specific implementations, and are not intended to limit the present application. The terms "a", "said", and "the" of singular forms used in the present application and the appended claims are also intended to include plural forms, unless otherwise specified in the context clearly. It should be further understood that, the term "and/or" used in the specification indicates and includes any or all possible combinations of one or more associated listed items.

It should be understood that although terms "first", "second", "third", etc. can be used in the present application to describe various types of information, the information is not limited to the terms. These terms are only used to distinguish information of the same type. For example, without departing from the scope of the present application, first information can also be referred to as second information, and similarly, second information can also be referred to as first information. Depending on the context, for example, the word "if' used here can be explained as "while", "when", or "in response to determining".

In the related technologies, a developer usually packs different types of files separately when updating an application. For example, assume that two types of files need to be run to update a certain application: a Hypertext Markup Language (HTML) 5 file and a React-Native file. Currently, the developer usually packs the two types of files separately. The application downloads two offline compressed packages from a server. Corresponding containers run the two offline compressed packages to complete updating after the two offline compressed packages are separately decompressed. However, in this implementation, separately packing different types of files can seriously affect development efficiency of the developer when there are many file types or the application is frequently updated. In addition, an application update rate is also affected because a plurality of offline compressed packages downloaded by the application need to be separately decompressed for running.

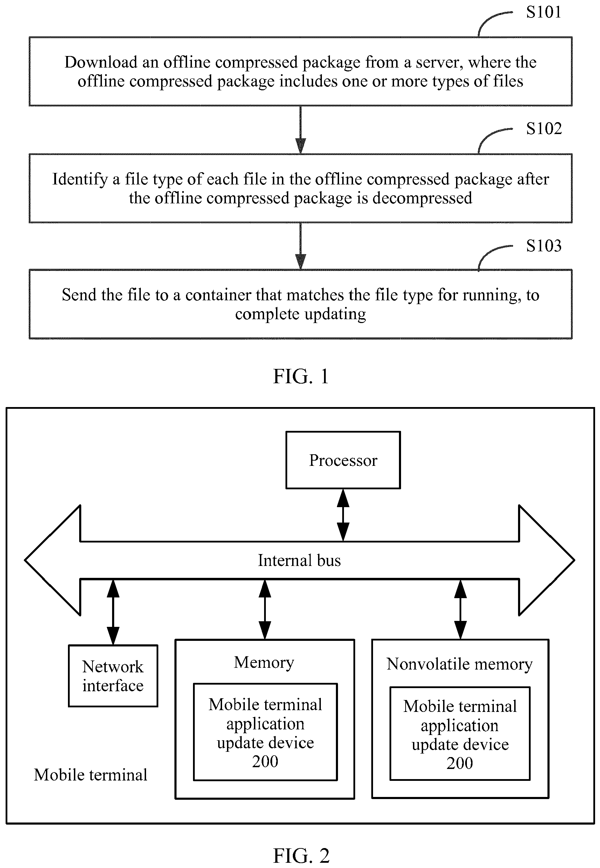

To resolve the described problems, the present application provides a mobile terminal application update method. Referring to FIG. 1, FIG. 1 is a schematic flowchart illustrating a mobile terminal application update method, according to an example implementation of the present application. The mobile terminal application update method can be applied to an application (APP) installed on a mobile terminal. The mobile terminal can include an intelligent terminal device such as a smartphone, a tablet computer, a personal digital assistant (PDA), or a PC. The mobile terminal application update method can include the following steps.

Step 101: Download an offline compressed package from a server, where the offline compressed package includes one or more types of files.

In this implementation, when preparing an offline compressed package needed for updating the APP, the developer of the APP can compile related files needed for updating and pack all the files into the same offline compressed package.

In this implementation, updating the APP usually needs running various types of files, for example, an HTML5 file and a React-Native file. The developer can compile the various types of files and pack all the files needed for current APP updating into the same offline compressed package.

In this implementation, the APP can download the offline compressed package needed for updating from the server after receiving a version update message pushed by the server. The offline compressed package includes the one or more types of files.

Step 102: Identify a file type of each file in the offline compressed package after the offline compressed package is decompressed.

Based on step 101, all the files included in the downloaded offline compressed package can be obtained after the offline compressed package is decompressed. In the present step, the file type of each file can be identified. Optionally, the file type can be identified based on a suffix of the file.

For example, the file can be determined as an HTML file when the suffix of the file is .html; or the file can be determined as a React-Native file when the suffix of the file is .jsbundle. Certainly, in actual applications, there can be other types of files. Details are omitted in the present application for simplicity.

Step 103: Send the file to a container that matches the file type for running, to complete updating.

Based on an identification result of step 102, the file can be sent to the container that matches the file type after the file type of the file is identified. The container runs the file to update the APP.

In this implementation, the file can be sent to a Web View container when the file is an HTML file, and the Web View container can run code in the HTML file. The file can be sent to a React-Native container when the file is a React-Native file, and the React-Native container can run code in the React-Native file. A similar operation is applied to other types of files. Details are omitted in the present application for simplicity. After each file in the offline compressed package is run by the container that matches the file type, the APP update is complete.

It can be seen from the previous descriptions that the developer in the present application can pack different types of files into the same offline compressed package without distinguishing the file types, thereby greatly improving development efficiency of the developer. In the present application, the APP can identify the file type of each file in the offline compressed package after downloading the offline compressed package, and send the file to the container that matches the file type for running, to update the APP without decompressing a plurality of offline compressed packages, thereby improving an application update rate.

Corresponding to the implementation of the mobile terminal application update method, the present application further provides an implementation of a mobile terminal application update device.

The implementation of the mobile terminal application update device in the present application can be applied to an APP installed on a mobile terminal. The device implementation can be implemented by software, hardware, or a combination of hardware and software. Software implementation is used as an example. As a logical device, the software is formed by reading a corresponding computer program instruction from a nonvolatile memory and running the instruction in a memory by a processor in the mobile terminal. In terms of hardware, as shown in FIG. 2, FIG. 2 is a hardware structural diagram illustrating a mobile terminal with a mobile terminal application update device, according to the present application. In addition to a processor, a memory, a network interface, and a nonvolatile memory shown in FIG. 2, the mobile terminal with the device in the implementation can further include other hardware based on actual functions of the mobile terminal. Details are omitted here for simplicity.

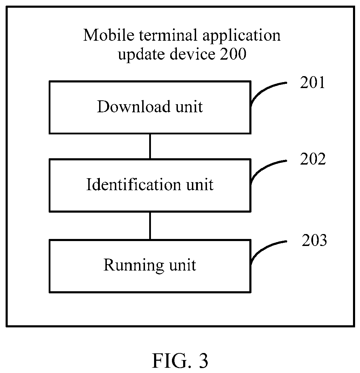

FIG. 3 is a schematic structural diagram illustrating a mobile terminal application update device, according to an example implementation of the present application.

Referring to FIG. 3, the mobile terminal application update device 200 can be applied to the APP installed on the mobile terminal shown in FIG. 2, and includes a download unit 201, an identification unit 202, and a running unit 203.

The download unit 201 is configured to download an offline compressed package from a server, where the offline compressed package includes one or more types of files.

The identification unit 202 is configured to identify a file type of each file in the offline compressed package after the offline compressed package is decompressed.

The running unit 203 is configured to send the file to a container that matches the file type for running, to complete updating.

Optionally, the identification unit 202 is configured to identify the file type of each file based on a suffix of the file in the offline compressed package after the offline compressed package is decompressed.

Optionally, the running unit 203 is configured to send the file to a Web View container for running when the file is an HTML file.

Optionally, the running unit 203 is configured to send the file to a React-Native container for running when the file is a React-Native file.

For an implementation process of functions and roles of each unit in the device, reference can be made to an implementation process of corresponding steps in the previous method. Details are omitted here for simplicity.

Because a device implementation basically corresponds to a method implementation, for related parts, reference can be made to related descriptions in the method implementation. The previously described device implementation is merely an example. The units described as separate parts can or cannot be physically separate, and parts displayed as units can or cannot be physical units, can be located in one position, or can be distributed on a plurality of network units. Some or all of the modules can be selected based on actual needs to achieve the objectives of the solutions in the present application. A person of ordinary skill in the art can understand and implement the present application without creative efforts.

The previous descriptions are merely implementations of the present application, and are not intended to limit the present application. Any modification, equivalent replacement, or improvement made without departing from the spirit and principle of the present application should fall within the protection scope of the present application.

## Claims

1. A mobile terminal application update method, wherein the method comprises:
downloading an offline compressed package from a server, wherein the offline compressed package comprises one or more types of files;
identifying a file type of each file in the offline compressed package after the offline compressed package is decompressed; and
sending the file to a container that matches the file type for running, to complete updating.

2. The method according to claim 1, wherein the identifying a file type of each file in the offline compressed package comprises:
identifying the file type of each file based on a suffix of the file in the offline compressed package.

3. The method according to claim 1, wherein the sending the file to a container that matches the file type for running comprises:
sending the file to a Web View container for running when the file is an HTML file.

4. The method according to claim 1, wherein the sending the file to a container that matches the file type for running comprises:
sending the file to a React-Native container for running when the file is a React-Native file.

5. A mobile terminal application update device, wherein the device comprises:
a download unit, configured to download an offline compressed package from a server, wherein the offline compressed package comprises one or more types of files;
an identification unit, configured to identify a file type of each file in the offline compressed package after the offline compressed package is decompressed; and
a running unit, configured to send the file to a container that matches the file type for running, to complete updating.

6. The device according to claim 5, wherein
the identification unit is configured to identify the file type of each file based on a suffix of the file in the offline compressed package after the offline compressed package is decompressed.

7. The device according to claim 5, wherein
the running unit is configured to send the file to a Web View container for running when the file is an HTML file.

8. The device according to claim 5, wherein
the running unit is configured to send the file to a React-Native container for running when the file is a React-Native file.
